# FASCICULE DE BREVET EUROPEEN

(11) **EP 4 237 332 B1**
(45) Date de publication et mention de la délivrance du brevet: **02.12.2026**
(21) Numéro de dépôt: 21799273.4
(22) Date de dépôt: 26.10.2021
(51) Int. Cl.: B64D 13/06

(54) **MODULE DE FOURNITURE D'UN AIR FRAIS PRESSURISÉ À UN PACK DE CONDITIONNEMENT D'AIR D'UNE CABINE D'UN AÉRONEF, SYSTÈME DE CONDITIONNEMENT D'AIR EQUIPÉ D'UN TEL MODULE, ET PROCÉDÉ CORRESPONDANT**
MODUL ZUR ZUFUHR VON UNTER DRUCK STEHENDER FRISCHLUFT FÜR EIN KLIMAAGGREGAT EINER FLUGZEUGKABINE, KLIMASYSTEM MIT EINEM SOLCHEN MODUL UND ENTSPRECHENDES VERFAHREN
MODULE FOR SUPPLYING PRESSURISED FRESH AIR TO AN AIR-CONDITIONING PACK OF AN AIRCRAFT CABIN, AIR-CONDITIONING SYSTEM EQUIPPED WITH SUCH A MODULE AND CORRESPONDING METHOD

(30) Priorité: 30.10.2020 FR 2011178
(43) Date de publication de la demande: 06.09.2023
(73) Titulaire: Liebherr-Aerospace Toulouse SAS, 31200 Toulouse (FR)
(72) Inventeur: SANCHEZ, Frédéric, 31016 Toulouse Cedex 2 (FR); HANKACHE, Walid, 31016 Toulouse Cedex 2 (FR); LAVERGNE, David, 31016 Toulouse Cedex 2 (FR); LANCE, Cédric, 31016 Toulouse Cedex 2 (FR)
(74) Mandataire: Bringer IP
(86) Numéro de dépôt international: PCT/EP2021/079652
(87) Numéro de publication internationale: WO 2022/090210

(56) Documents cités:
- EP-A1- 2 918 497
- EP-A1- 3 363 740
- EP-A1- 3 480 113
- US-A1- 2019 383 220
- US-B1- 8 047 903
- US-B1- 9 481 468

## Description

### Domaine technique de l'invention

L'invention concerne un système de conditionnement d'air d'une cabine d'aéronef comprenant un dispositif de prélèvement d'air sur un moteur propulsif de l'aéronef équipé d'un module auxiliaire. L'invention concerne également un module auxiliaire de fourniture d'un air pressurisé à partir d'un air frais prélevé à l'extérieur de l'aéronef. L'invention concerne aussi un procédé de conditionnement d'air d'une cabine d'aéronef mettant en œuvre un système selon l'invention.

### Arrière-plan technologique

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l'aéronef qui nécessite un air à une pression et/ou une température contrôlée. Le terme « turbine » désigne un dispositif rotatif destiné à utiliser l'énergie cinétique de l'air pour faire tourner un arbre supportant les aubes de la turbine. Le terme « compresseur » désigne un dispositif rotatif destiné à augmenter la pression de l'air qu'il reçoit en entrée. Enfin, une vanne de régulation d'un flux d'air est dite « ouverte » lorsqu'elle permet le passage d'air et « fermée » lorsqu'elle bloque le passage d'air.

Un système de conditionnement d'air d'une cabine d'un aéronef comprend en général un dispositif de prélèvement d'air comprimé (aussi désigné par le terme « air bleed ») sur au moins un compresseur d'un moteur de propulsion de l'aéronef et une turbomachine à cycle à air comprenant au moins un compresseur et une turbine couplés mécaniquement. Le compresseur est alimenté en air par le dispositif de prélèvement d'air comprimé après passage par une vanne de régulation de débit ou de pression, et la turbine comprend une sortie d'air qui alimente la cabine en air conditionné.

Le système comprend en outre différents échangeurs de chaleur et vannes de régulation. L'ensemble de ces éléments (turbomachine, échangeurs, vannes, etc.) forme un pack de conditionnement d'air qui permet de délivrer à la cabine un air à température et pression contrôlées à partir d'un air haute pression fourni par le dispositif de prélèvement d'air.

Dans toute la suite, on désigne un tel système de conditionnement d'air mettant en œuvre un dispositif de prélèvement d'air sur un moteur propulsif de l'aéronef en vue de l'injecter dans la cabine après traitement par un pack de conditionnement d'air comme un « système de conditionnement d'air classique ».

L'air délivré à la cabine est donc en général un air prélevé sur les moteurs propulsifs de l'aéronef qui est ensuite conditionné par le pack de conditionnement d'air. Il arrive que cet air prélevé sur les moteurs propulsifs soit contaminé par un incident d'émanation (plus connu sous la dénomination anglaise de « fume event »). Lors de la survenue d'un tel incident, il est aujourd'hui nécessaire de couper le pack de conditionnement d'air, de réduire l'altitude de l'aéronef et d'initier une procédure d'atterrissage d'urgence, pour sauvegarder l'intégrité physique des passagers.

Il existe également aujourd'hui des systèmes de conditionnement d'air qui se passent d'un prélèvement d'air sur les moteurs propulsifs, de sorte que ces systèmes ne sont pas sensibles aux éventuels incidents d'émanation susmentionnés. Il s'agit par exemple des systèmes de conditionnement d'air électriques qui mettent en œuvre des turbomachines à motorisation électrique pour comprimer un air prélevé à l'extérieur de l'aéronef et l'amener aux conditions de température et de pression compatibles avec une utilisation en cabine. L'intégration d'un tel système électrique dans un aéronef nécessite d'adapter dans une large mesure la structure du système d'air de sorte qu'il est en pratique complexe de remplacer simplement les systèmes de conditionnement d'air classiques par de tels systèmes électriques.

Des systèmes de conditionnement d'air de cabine connues sont divulgués dans les documents EP 2 918 497 A1 et US 2019/383220 A1.

Les inventeurs ont donc cherché à modifier un système de conditionnement d'air classique (c'est-à-dire un système dont la source d'air haute pression est formée par un prélèvement d'air sur un moteur propulsif de l'aéronef) pour qu'il puisse continuer à fonctionner, y compris en cas de survenue d'un incident d'émanation.

En particulier, les inventeurs ont cherché à développer un module qui peut être greffé sur un pack de conditionnement d'air classique pour le doter d'une nouvelle fonctionnalité lui permettant d'être opérationnel y compris en cas de survenue d'un incident d'émanation.

### Objectifs de l'invention

L'invention vise donc à fournir un système de conditionnement d'air qui permet de pallier au moins certains des inconvénients des systèmes de conditionnement d'air connus.

En particulier, l'invention vise à fournir un système de conditionnement d'air comprenant un prélèvement d'air haute pression sur un moteur propulsif de l'aéronef qui n'impose pas un atterrissage d'urgence lors de la survenu d'un incident d'émanation sur l'un des moteurs propulsifs de l'aéronef.

L'invention vise aussi à fournir, dans au moins un mode de réalisation, un module de fourniture d'un air pressurisé qui permet de doter un système de conditionnement d'air classique d'une nouvelle fonctionnalité lui permettant d'être opérationnel lors de la survenue d'un incident d'émanation.

L'invention vise aussi à fournir, dans au moins un mode de réalisation, un module de fourniture d'un air pressurisé qui peut être installé sur un aéronef sans imposer de modifications substantielles du système de conditionnement d'air préexistant.

L'invention vise aussi à fournir, dans au moins un mode de réalisation, un système de conditionnement d'air qui permet de limiter la trainée de l'aéronef.

L'invention vise aussi à fournir un aéronef équipé d'un système de conditionnement d'air selon l'invention.

L'invention vise enfin à fournir un procédé de conditionnement d'air d'une cabine d'un aéronef mettant en œuvre un système de conditionnement d'air selon l'invention.

### Exposé de l'invention

Pour ce faire, l'invention concerne un système de conditionnement d'air d'une cabine d'un aéronef comprenant :
- un dispositif de prélèvement d'air pressurisé sur un moteur propulsif de l'aéronef, dit dispositif de prélèvement moteur,
- un pack de conditionnement d'air comprenant une entrée d'air de pack reliée fluidiquement audit dispositif de prélèvement moteur, et une sortie d'air de pack adaptée pour pouvoir être reliée fluidiquement à ladite cabine pour pouvoir l'alimenter en air à pression et température contrôlées.

Le système selon l'invention est caractérisé en ce qu'il comprend en outre un module auxiliaire de fourniture d'un air pressurisé comprenant :
- une turbomachine, dite turbomachine auxiliaire, comprenant au moins un compresseur muni d'une entrée d'air et une sortie d'air, et au moins une turbine munie d'une entrée d'air et d'une sortie d'air, couplés mécaniquement l'un à l'autre,
- une conduite, dite conduite d'entrée d'air frais, adaptée pour pouvoir relier fluidiquement une écope de prélèvement d'air extérieur et une entrée d'air du compresseur,
- une conduite, dite conduite d'entrée d'air bleed, adaptée pour pouvoir relier en communication de fluide ledit dispositif de prélèvement moteur et une entrée de la turbine, ladite conduite étant équipée d'une vanne de régulation du débit d'air alimentant ladite turbine, dite vanne module,
- une conduite, dite conduite de sortie d'air frais pressurisé, adaptée pour pouvoir relier fluidiquement une sortie d'air du compresseur et ladite entrée d'air de pack.

Le système est aussi caractérisé en ce qu'il comprend une unité de commande de ladite vanne module configurée pour pouvoir activer au moins les deux modes suivants :
- un mode, dit mode standard, dans lequel ladite vanne module est fermée, de manière à ce que ladite entrée d'air de pack soit exclusivement alimentée par l'air pressurisé issu du dispositif de prélèvement moteur,
- un mode, dit mode air frais, dans lequel ladite vanne module est ouverte, de manière à ce que ladite entrée d'air de pack puisse être alimentée par l'air pressurisé issu du module auxiliaire.

Le système de conditionnement d'air selon l'invention permet donc de disposer d'au moins deux modes de fonctionnement distincts : un mode standard dans lequel le pack de conditionnement d'air est alimenté en air pressurisé à partir du dispositif de prélèvement moteur, et un mode air frais dans lequel le pack de conditionnement d'air est alimenté en air pressurisé à partir du module auxiliaire.

Le module auxiliaire est configuré pour pouvoir fournir un air pressurisé à partir d'une source d'air frais prélevé à l'extérieur de l'aéronef. Dans ce mode de fonctionnement, l'air issu du prélèvement moteur n'est utilisé que pour entrainer en rotation la turbine de la turbomachine auxiliaire. L'air qui alimente la cabine est l'air frais prélevé à l'extérieur et pressurisé par le compresseur de la turbomachine auxiliaire entrainée en rotation par la turbine susmentionnée.

Ainsi, en cas de survenue d'un événement d'émanation (plus connu sous la dénomination anglaise de « fume event »), le système peut basculer du mode standard au mode air frais et ainsi assurer un conditionnement de la cabine sans recourir à l'air prélevé sur les moteurs propulsifs de l'aéronef et potentiellement contaminé par l'événement d'émanation. Dans le mode air frais, l'air conditionné qui alimente la cabine est un air frais extérieur pressurisé par le module auxiliaire et conditionné par le pack de conditionnement d'air.

Un système selon l'invention permet donc à l'aéronef de poursuivre son vol sans imposer un atterrissage d'urgence en cas d'incident d'émanation.

Le basculement du mode standard au mode air frais peut être initié directement par le pilote ou automatiquement à partir de capteurs dédiés configurés pour détecter la survenue d'un incident d'émanation.

Le changement de mode est relayé par l'unité de commande du système qui pilote la vanne module, agencée sur la conduite d'entrée d'air bleed qui relie le dispositif de prélèvement moteur et l'entrée de la turbine de la turbomachine auxiliaire.

Avantageusement et selon une première variante de l'invention, le système comprend en outre une vanne de régulation, dite vanne d'isolation module, agencée fluidiquement entre ledit dispositif de prélèvement moteur et l'entrée d'air de pack, et pilotée par ladite unité de commande pour être ouverte dans ledit mode standard et fermée dans ledit mode air frais.

Selon cette variante avantageuse, la combinaison de la vanne module et de la vanne d'isolation module permet d'isoler le module du pack de conditionnement d'air en mode standard, d'isoler l'arrivée de l'air bleed issu du dispositif de prélèvement moteur en mode air frais et de moduler le débit envoyé à la turbine de la turbomachine auxiliaire.

Avantageusement et selon une autre variante de l'invention, ladite sortie d'air du compresseur de ladite turbomachine auxiliaire est reliée à ladite entrée d'air de pack en aval d'une vanne de régulation, dite vanne d'entrée de pack, agencée fluidiquement entre ledit dispositif de prélèvement moteur et ladite entrée d'air de pack.

Selon cette variante, l'air en sortie du compresseur de la turbomachine auxiliaire est injecté en aval d'une vanne d'entrée de pack qui joue alors le rôle de vanne d'isolation de l'arrivée d'air bleed au pack de conditionnement d'air.

La vanne d'entrée de pack est une vanne préexistante des systèmes de conditionnement d'air classique et est initialement utilisée pour réguler le débit ou la pression d'air issu du dispositif de prélèvement moteur qui alimente l'entrée d'air de pack. Aussi, et selon cette variante, la vanne d'entrée de pack, plus connue sous l'acronyme anglais FCV (pour *Flow Control Valve*) est utilisée en plus de sa fonction de régulation d'air dans le mode standard, pour isoler l'arrivée d'air issu du dispositif de prélèvement moteur du pack de conditionnement d'air dans le mode air frais. En d'autres termes, cette vanne remplace fonctionnellement la vanne d'isolation module de la première variante.

Avantageusement et selon l'invention, le système comprend en outre une trappe montée sur ladite écope de prélèvement d'air extérieur et pilotée par ladite unité de commande pour pouvoir bloquer l'entrée d'air de l'écope dans ledit mode standard.

Cette variante avantageuse permet de réduire la trainée de l'avion en bloquant l'entrée d'air frais dans le module auxiliaire lorsque ce dernier n'est pas utilisé.

Avantageusement et selon une autre variante de l'invention, le système comprend en outre une conduite, dite conduite de récupération d'air cabine, adaptée pour pouvoir relier fluidiquement une sortie d'air de la cabine - notamment une sortie d'air vicié - et une entrée d'air de ladite turbine de ladite turbomachine auxiliaire.

Selon cette variante avantageuse, l'air cabine est récupéré pour entrainer au moins en partie la turbine de la turbomachine auxiliaire, ce qui permet de limiter le prélèvement d'air sur les moteurs propulsifs de l'aéronef.

De préférence, cette conduite de récupération d'air cabine est équipée d'une vanne de régulation du débit d'air alimentant la turbine de la turbomachine auxiliaire, dite vanne de récupération.

Avantageusement et selon cette variante, le système comprend en outre une vanne trois voies alimentée d'une part par le flux d'air issu du dispositif de prélèvement moteur et d'autre part par le flux d'air issu de la récupération cabine et alimentant une entrée de ladite turbine de la turbomachine auxiliaire.

Cette variante avantageuse permet de déterminer le flux d'air qui alimente la turbine de la turbomachine auxiliaire en fonction du mode de fonctionnement (standard ou air frais).

Selon une variante de l'invention, la turbomachine auxiliaire comprend deux turbines de détente montées en parallèles, la première turbine étant reliée fluidiquement au dispositif de prélèvement moteur et la deuxième turbine étant reliée fluidiquement à la conduite de récupération d'air cabine, de manière à pouvoir entrainer la turbomachine auxiliaire simultanément par l'air haute pression issu du dispositif de prélèvement moteur et par l'air de récupération cabine.

Cette variante avantageuse permet d'utiliser simultanément l'énergie de l'air haute pression issu du dispositif de prélèvement moteur et l'énergie de l'air vicié évacué de la cabine pour entrainer la turbomachine auxiliaire permettant de comprimer l'air frais alimentant le compresseur de la turbomachine. Cette variante permet donc de limiter le prélèvement d'air sur le moteur propulsif de l'aéronef.

Avantageusement et selon cette variante, le système comprend en outre un échangeur de chaleur agencé simultanément sur ladite conduite de récupération d'air cabine et sur ladite conduite de sortie d'air pressurisé dudit module auxiliaire pour pouvoir assurer des échanges thermiques entre le flux d'air issu du compresseur de ladite turbomachine auxiliaire et le flux d'air issu de ladite cabine.

Selon cette variante avantageuse, l'échangeur de chaleur permet de récupérer l'énergie thermique en sortie du compresseur pour augmenter la température, et donc l'énergie en entrée de turbine.

Cet échangeur est de préférence agencé en aval d'une vanne trois vois à une entrée alimentée par la sortie du compresseur de la turbomachine auxiliaire et par deux sorties alimentant respectivement l'entrée d'air du pack de conditionnement d'air et une conduite reliant la sortie d'air du pack et l'entrée de la cabine.

Cet échangeur permet ainsi d'obtenir une température de l'air en sortie du module qui est proche de la température cabine.

Avantageusement et selon l'invention, ladite turbomachine auxiliaire est une turbomachine quatre roues comprenant deux turbines en série et deux compresseurs en série couplés mécaniquement les uns aux autres.

L'invention concerne aussi un module auxiliaire de fourniture d'un air pressurisé à un système de conditionnement d'air d'une cabine d'un aéronef comprenant un dispositif de prélèvement d'air pressurisé sur un moteur propulsif de l'aéronef et un pack de conditionnement d'air comprenant une entrée d'air de pack reliée fluidiquement audit dispositif de prélèvement d'air pressurisé, et une sortie d'air de pack reliée fluidiquement à ladite cabine pour pouvoir l'alimenter en air à pression et température contrôlées.

Le module selon l'invention est caractérisé en ce qu'il comprend :
- une turbomachine, dite turbomachine auxiliaire, comprenant au moins un compresseur muni d'une entrée d'air et une sortie d'air, et au moins une turbine munie d'une entrée d'air et d'une sortie d'air, couplés mécaniquement l'un à l'autre,
- une conduite, dite conduite d'entrée d'air frais, adaptée pour pouvoir relier fluidiquement une écope de prélèvement d'air extérieur et une entrée d'air du compresseur,
- une conduite, dite conduite d'entrée d'air bleed, adaptée pour pouvoir relier en communication de fluide ledit dispositif de prélèvement d'air pressurisé et une entrée de la turbine, ladite conduite étant équipée d'une vanne de régulation du débit d'air, dite vanne module, pilotée par une unité de commande pour pouvoir activer au moins l'un des deux modes suivants :
   o un mode, dit mode standard, dans lequel ladite vanne module est fermée, de manière à ce que ladite entrée d'air de pack soit exclusivement alimentée par l'air issu du dispositif de prélèvement d'air pressurisé,
   o un mode, dit mode air frais, dans lequel ladite vanne module est ouverte, de manière à ce que ladite entrée d'air de pack puisse être alimentée par l'air pressurisé issu du module auxiliaire,
- une conduite, dite conduite de sortie d'air frais pressurisé, adaptée pour pouvoir relier fluidiquement une sortie d'air du compresseur et ladite entrée d'air de pack.

Les avantages et effets techniques d'un système de conditionnement d'air selon l'invention s'appliquent *mutatis mutandis* à un module auxiliaire selon l'invention.

En outre, un module auxiliaire selon l'invention peut équiper un système de conditionnement d'air classique pour le doter d'une nouvelle fonctionnalité de continuité de service, y compris en cas de la survenue d'un incident d'émanation (sous réserve bien sûr que cet incident d'émanation soit localisé en amont du pack de conditionnement d'air et non pas au sein du pack de conditionnement d'air).

L'invention concerne également un aéronef comprenant au moins un moteur de propulsion, une cabine et un système de conditionnement d'air de ladite cabine, caractérisé en ce que ledit système de conditionnement d'air est conforme à l'invention.

Les avantages et effets techniques d'un système de conditionnement d'air selon l'invention s'appliquent *mutatis mutandis* à un aéronef selon l'invention.

L'invention concerne également un procédé de conditionnement d'air d'une cabine d'un aéronef comprenant :
- un prélèvement d'air pressurisé sur un moteur propulsif de l'aéronef,
- un conditionnement d'un air destiné à alimenter la cabine par un pack de conditionnement d'air, comprenant une entrée d'air de pack reliée fluidiquement audit dispositif de prélèvement d'air pressurisé, et une sortie d'air de pack reliée fluidiquement à ladite cabine pour pouvoir l'alimenter en air à pression et température contrôlées.

Le procédé selon l'invention est caractérisé en ce qu'il comprend en outre :
- une fourniture d'un air pressurisé par un module auxiliaire de fourniture d'un air pressurisé comprenant :
   o une turbomachine, dite turbomachine auxiliaire, comprenant au moins un compresseur muni d'une entrée d'air et une sortie d'air, et au moins une turbine munie d'une entrée d'air et d'une sortie d'air, couplés mécaniquement l'un à l'autre,
   o une conduite, dite conduite d'entrée d'air frais, adaptée pour pouvoir relier fluidiquement une écope de prélèvement d'air extérieur et une entrée d'air du compresseur,
   o une conduite, dite conduite d'entrée d'air bleed, adaptée pour pouvoir relier en communication de fluide ledit dispositif de prélèvement d'air pressurisé et une entrée de la turbine, ladite conduite étant équipée d'une vanne de régulation du débit d'air, dite vanne module,
   o une conduite, dite conduite de sortie d'air frais pressurisé, adaptée pour pouvoir relier fluidiquement une sortie d'air du compresseur et ladite entrée d'air de pack.
- et une commande de ladite vanne module pour pouvoir activer au moins l'un des deux modes suivants :
   o un mode, dit mode standard, dans lequel ladite vanne module est fermée, de manière à ce que ladite entrée d'air de pack soit exclusivement alimentée par l'air issu du dispositif de prélèvement d'air pressurisé,
   o un mode, dit mode air frais, dans lequel ladite vanne module est ouverte, de manière à ce que ladite entrée d'air de pack puisse être alimentée par l'air pressurisé issu du module auxiliaire.

Les avantages et effets techniques d'un système de conditionnement d'air selon l'invention s'appliquent *mutatis mutandis* à un procédé de conditionnement d'air selon l'invention.

L'invention concerne également un système de conditionnement d'air, un module auxiliaire de fourniture d'un air pressurisé un aéronef et un procédé de conditionnement d'air d'une cabine d'un aéronef caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un premier mode de réalisation de l'invention,
[Fig. 2] est une vue schématique d'un système de conditionnement d'air selon un deuxième mode de réalisation de l'invention,
[Fig. 3] est une vue schématique d'un système de conditionnement d'air selon un troisième mode de réalisation de l'invention,
[Fig. 4] est une vue schématique d'un système de conditionnement d'air selon un quatrième mode de réalisation de l'invention.

### Description détaillée d'un mode de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références dans toutes les figures.

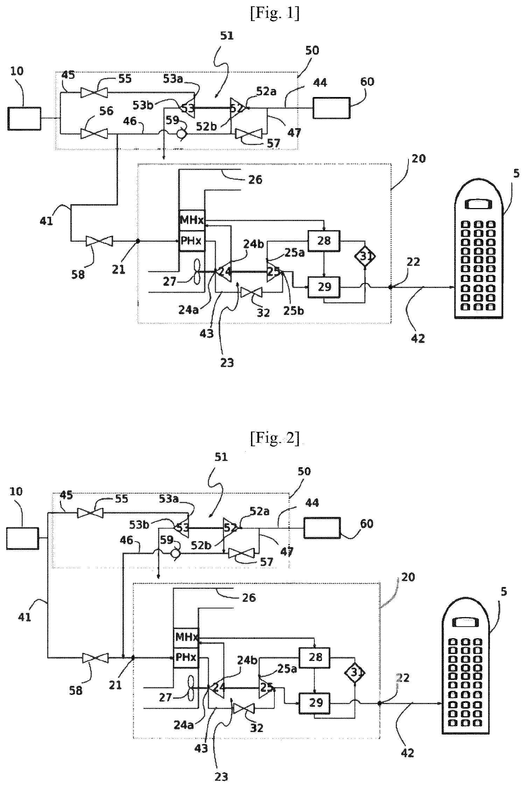

La figure 1 illustre schématiquement un système de conditionnement d'air d'une cabine 5 d'un aéronef selon un premier mode de réalisation.

Le système de prélèvement d'air comprend un dispositif de prélèvement d'air haute pression sur un moteur propulsif de l'aéronef, dit dispositif de prélèvement moteur 10, un pack de conditionnement d'air 20 et un module auxiliaire de fourniture d'un air pressurisé 50.

Le pack de conditionnement d'air 20 comprend une entrée d'air de pack 21 reliée fluidiquement au dispositif de prélèvement moteur 10 par une conduite 41, et une sortie d'air de pack 22 adaptée pour pouvoir être reliée fluidiquement à la cabine 5 par une conduite 42 pour pouvoir l'alimenter en air à pression et température contrôlées.

Cette conduite 41 est en outre équipée d'une vanne de régulation, dite vanne d'entrée de pack 58 pour réguler le débit d'air qui alimente l'entrée d'air 21 du pack de conditionnement d'air 20.

Le pack de conditionnement d'air 20 comprend en outre une turbomachine 23 à cycle à air comprenant un compresseur 24 et une turbine 25 de détente couplés mécaniquement l'un à l'autre par un arbre mécanique.

Le compresseur 24 comprend une entrée d'air 24a reliée à l'entrée d'air 21 du pack par l'intermédiaire d'un échangeur primaire de refroidissement, référencé PHX sur les figures (pour *Primary Heat Exchanger* en langue anglaise) et de conduites non référencées sur les figures à des fins de clarté.

Ainsi, l'air haute pression issu du dispositif de prélèvement moteur 10 alimente le compresseur 24 de la turbomachine à cycle à air 23 après passage dans l'échangeur primaire PHX. Cet échangeur PHX comprend une passe chaude formée par l'air délivré par le dispositif de prélèvement moteur par l'intermédiaire de la conduite 41 et une passe froide alimentée par un air à pression dynamique, qui circule dans un canal de 26 de circulation d'un air dynamique, dit ci-après canal d'air dynamique.

La circulation d'air dynamique dans le canal 26 d'air dynamique est assurée par exemple par un ventilateur 27 monté sur l'arbre de la turbomachine à cycle à air 23 qui s' étend jusque dans le canal 26 d'air dynamique. Selon d'autres variantes, le ventilateur 27 peut être disjoint de l'arbre et entrainé en rotation par un moteur électrique indépendant.

Le compresseur 24 comprend également une sortie d'air 24b reliée fluidiquement à un échangeur principal, référencée MHx sur les figures (pour *Main Heat Exchanger* en langue anglaise), qui est agencé dans le canal 26 de circulation d'air dynamique prélevé à l'extérieur de l'aéronef.

Cet échangeur MHX comprend un circuit primaire chaud alimenté par le flux d'air issu du compresseur 24 et un circuit secondaire froid, en interaction thermique avec le circuit primaire, alimenté par l'air dynamique circulant dans le canal 26 d'air dynamique. En d'autres termes, l'air issu du compresseur 24 est refroidi, dans l'échangeur MHX, par l'air dynamique circulant dans le canal 26 de circulation d'air dynamique

La turbine 25 de détente de la turbomachine à cycle à air 23 comprend une entrée d'air 25a alimentée par l'air issu de l'échangeur MHX après passage par une boucle d'extraction d'eau, décrite ci-dessous, et une sortie d'air 25b reliée à ladite cabine 5, pour pouvoir l'alimenter en air à pression et température contrôlées.

La boucle d'extraction d'eau comprend, selon le mode de réalisation des figures, un réchauffeur 28 comprenant un circuit primaire d'air alimenté par l'air issu de l'échangeur principal MHX, en interaction thermique avec un circuit secondaire alimenté par l'air issu d'un extracteur 31 d'eau et destiné à alimenter l'entrée 25a de la turbine de détente.

La boucle d'extraction d'eau comprend également un condenseur 29 comprenant un circuit primaire d'air alimenté par le flux d'air en sortie du réchauffeur 28, en interaction thermique avec un circuit secondaire d'air alimenté par le flux d'air issu de la turbine 25 de détente, pour permettre une condensation du flux d'air du circuit primaire.

Enfin, la boucle d'extraction comprend également un extracteur d'eau 31 agencé en sortie du condenseur 29 et configuré pour pouvoir récupérer l'eau condensée par le condenseur. De manière connue, cet eau récupérée peut être injectée dans le canal de circulation d'air dynamique en amont des échangeurs MHx et PHx par une conduite non représentée sur les figures à des fins de clarté.

Le pack de conditionnement d'air selon le mode de réalisation des figures comprend également une vanne 32 de régulation agencée sur une conduite 43 qui relie l'entrée 24a du compresseur et la sortie 25b de la turbine.

La figure 1 illustre également le module auxiliaire 50 de fourniture d'un air pressurisé.

Ce module 50 comprend une turbomachine, dite turbomachine auxiliaire 51, comprenant un compresseur 52 muni d'une entrée d'air 52a et une sortie d'air 52b, et une turbine 53 munie d'une entrée d'air 53a et d'une sortie d'air 53b, couplés mécaniquement l'un à l'autre.

Le module comprend en outre une conduite d'entrée d'air frais 44 reliant fluidiquement une écope 60 de prélèvement d'air extérieur et l'entrée d'air 52a du compresseur 52.

Le module 50 comprend également une conduite d'entrée d'air bleed 45 reliant le dispositif de prélèvement moteur 10 et l'entrée 53a de la turbine 53. Cette conduite 45 est équipée d'une vanne de régulation du débit d'air alimentant ladite turbine, dite vanne module 55.

Le module 50 comprend également une conduite de sortie d'air frais 46 pressurisé adaptée pour pouvoir relier fluidiquement la sortie d'air 52b du compresseur et l'entrée d'air de pack 21. Pour ce faire, la conduite 46 débouche dans la conduite 41 qui relie le dispositif de prélèvement moteur 10 et l'entrée 21 d'air du pack, en amont de la vanne 58. Cette conduite 46 est en outre équipée d'un clapet anti-retour 59.

Selon le mode de réalisation de la figure 1, le module comprend également une conduite 47 équipé d'une vanne 57 qui permet de contourner le compresseur 52 en cas de besoin.

Le module 50 comprend également dans ce mode de réalisation, une vanne d'isolation module 56 agencée sur la conduite 41, entre le dispositif de prélèvement moteur 10 et l'entrée d'air de pack 21.

Enfin, le système de conditionnement d'air comprend une unité de commande, non représentée sur les figures à des fins de clarté, configurée pour pouvoir commander au moins la vanne 55 module et la vanne 56 d'isolation module de manière à pouvoir activer au moins l'un des deux modes suivants :
- un mode standard, dans lequel la vanne module 55 est fermée et la vanne d'isolation module 56 est ouverte de manière à ce que l'entrée d'air de pack 21 soit exclusivement alimentée par l'air pressurisé issu du dispositif de prélèvement moteur 10. En effet, dans cette configuration, l'air issu du dispositif de prélèvement moteur 10 est acheminé par la conduite 41 vers l'entrée 21 du pack de conditionnement d'air qui peut traiter l'air pour l'amener à la température et pression compatibles avec une injection dans la cabine 5.
- un mode air frais, dans lequel la vanne module 55 est ouverte et la vanne d'isolation module 56 est fermée de manière à ce que l'entrée d'air de pack 21 soit alimentée par l'air pressurisé issu du module auxiliaire 50. En effet, dans cette configuration, l'air issu du dispositif de prélèvement moteur entraine en rotation la turbine 53 qui entraine elle-même le compresseur 52. Ce dernier, alimenté par un air frais prélevé à l'extérieur par l'écope 60, comprime cet air et le délivre à la conduite 46 qui débouche dans la conduite 41 qui alimente l'entrée d'air 21 du pack de conditionnement d'air. Ainsi, le pack est alimenté en un air haute pression qui n'est pas issu du moteur propulsif de l'aéronef.

Ainsi, cette architecture permet d'alimenter le pack de conditionnement d'air en air pressurisé obtenu à partir d'un air frais prélevé à l'extérieur de l'aéronef lors de la survenue d'un incident d'émanation.

L'unité de commande peut également commander les autres vannes du système de conditionnement d'air, en particulier les vannes 58, 57 et 32, en fonction des besoins de la cabine en air conditionné.

La figure 2 est une variante de réalisation du système de la figure 1. Le pack de conditionnement d'air est identique à celui de la figure 1 et n'est pas décrit à nouveau.

Le module auxiliaire 50 présente une architecture similaire à l'exception de la vanne 56 d'isolation module qui est supprimée et de la conduite 46 qui débouche en aval de la vanne d'entrée de pack 58.

Ainsi, dans ce mode de réalisation, la fonction d'isolation est assurée par cette vanne d'entrée de pack 58 et non plus par la vanne 56 du premier mode de réalisation qui est supprimée dans ce mode de réalisation.

Le fonctionnement du module 50 est en revanche identique au premier mode de réalisation et permet de basculer le système d'un mode standard dans lequel l'air haute pression fourni à l'entrée d'air de pack 21 est issu du dispositif de prélèvement moteur 10 à un mode air frais dans lequel l'air haute pression fourni à l'entrée d'air de pack 21 est issu du module 50.

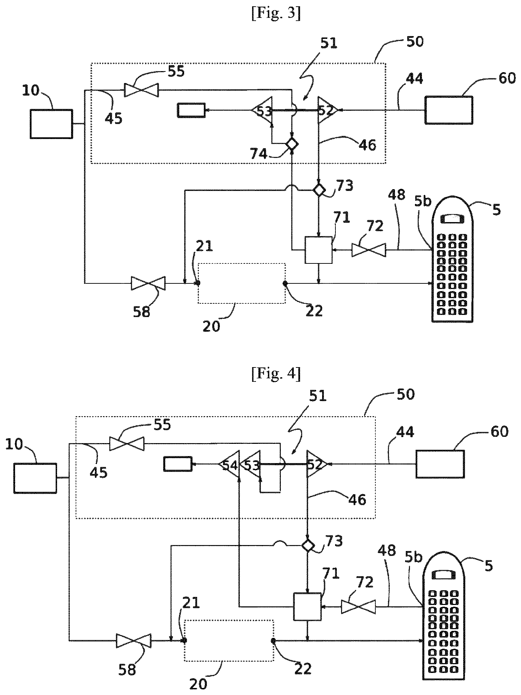

La figure 3 est une autre variante de réalisation pour laquelle le détail du pack de conditionnement d'air 20 n'est pas représenté à des fins de clarté. La particularité de ce mode de réalisation est de récupérer une partie de l'énergie cabine pour assurer l'entrainement de la turbomachine 51 du module auxiliaire.

Ainsi, l'air injecté en cabine 5 est un mélange entre l'air prélevé sur le dispositif de prélèvement moteur 10 et conditionné par le pack de conditionnement d'air 20 et l'air prélevé à l'extérieur et comprimé par la turbomachine 51 entrainée par l'air évacué de la cabine.

Pour ce faire, le système comprend une conduite de récupération d'air cabine 48 reliant une sortie d'air 5b de la cabine et l'entrée d'air de la turbine 53 de la turbomachine 51 auxiliaire. Cette conduite est équipée d'une vanne de régulation 72 du débit d'air.

Le système comprend en outre une vanne 74 trois voies à deux entrées alimentées respectivement par le flux d'air issu du dispositif de prélèvement moteur 10 et le flux d'air acheminé par la conduite de récupération d'air cabine 48 et une sortie alimentant l'entrée de la turbine 53.

Le système comprend également un échangeur 71 de chaleur agencé simultanément sur la conduite de récupération d'air cabine 48 et sur la conduite de sortie d'air pressurisé 46 du module auxiliaire pour pouvoir assurer des échanges thermiques entre le flux d'air issu du compresseur 52 et le flux d'air issu de ladite cabine 5.

Le système comprend aussi une vanne 73 trois voies à une entrée alimentée par le flux d'air issu du compresseur 52 et deux sorties alimentant respectivement l'échangeur 71 de chaleur et l'entrée d'air 21 du pack de conditionnement d'air 20.

Quel que soit le mode de réalisation, l'air issu de la turbine 53 de la turbomachine 53 du module auxiliaire est rejeté à l'extérieur de l'aéronef.

La figure 4 est une variante du système de la figure 3 dans laquelle la vanne trois voies 74 est supprimée et dans laquelle la turbomachine auxiliaire comprend deux turbines 53 et 54 alimentées chacune par un flux d'air distinct issu respectivement du dispositif de prélèvement d'air moteur 10 et de la récupération d'air cabine 5. Cette solution hybride permet d'entrainer en rotation la turbomachine 51, et donc le compresseur 52, simultanément par le flux d'air haute pression issu du dispositif de prélèvement moteur et par le flux d'air de récupération cabine.

L'invention ne se limite pas aux seuls modes de réalisation décrits. En particulier, la turbomachine 51 du module auxiliaire peut être une turbomachine à deux roues telle que décrite ou une turbomachine quatre roues, par exemple avec deux compresseurs et deux turbines montées en série. D'autres types de machines peuvent également être utilisées sans remettre en cause l'effet technique visé par l'invention, dans la mesure où les autres types de machines entrent dans le champ d'application des revendications.

## Revendications

1. Système de conditionnement d'air d'une cabine (5) d'un aéronef comprenant :
- un dispositif de prélèvement d'air pressurisé sur un moteur propulsif de l'aéronef, dit dispositif de prélèvement moteur (10),
- un pack de conditionnement d'air (20) comprenant une entrée d'air de pack (21) reliée fluidiquement audit dispositif de prélèvement moteur (10), et une sortie d'air de pack (22) adaptée pour pouvoir être reliée fluidiquement à ladite cabine (5) pour pouvoir l'alimenter en air à pression et température contrôlées,
**caractérisé en ce qu'**il comprend en outre un module auxiliaire (50) de fourniture d'un air pressurisé comprenant :
- une turbomachine, dite turbomachine auxiliaire (51), comprenant au moins un compresseur (52) muni d'une entrée d'air (52a) et une sortie d'air (52b), et au moins une turbine (53) munie d'une entrée d'air (53a) et d'une sortie d'air (53b), couplés mécaniquement l'un à l'autre,
- une conduite, dite conduite d'entrée d'air frais (44), adaptée pour pouvoir relier fluidiquement une écope (60) de prélèvement d'air extérieur et ladite entrée d'air (52a) du compresseur,
- une conduite, dite conduite d'entrée d'air bleed (45), adaptée pour pouvoir relier en communication de fluide ledit dispositif de prélèvement moteur (10) et ladite entrée (53a) de la turbine, ladite conduite (45) étant équipée d'une vanne de régulation du débit d'air alimentant ladite turbine, dite vanne module (55),
- une conduite, dite conduite de sortie d'air frais pressurisé (46), adaptée pour pouvoir relier fluidiquement ladite sortie d'air (52b) du compresseur et ladite entrée d'air de pack (21).
et **en ce qu'**il comprend une unité de commande de ladite vanne module (55) configurée pour pouvoir activer au moins les deux modes suivants :
- un mode, dit mode standard, dans lequel ladite vanne module (55) est fermée, de manière à ce que ladite entrée d'air de pack (21) soit exclusivement alimentée par l'air bleed pressurisé issu du dispositif de prélèvement moteur (10),
- un mode, dit mode air frais, dans lequel ladite vanne module (55) est ouverte, de manière à ce que ladite entrée d'air de pack (21) puisse être alimentée par l'air pressurisé issu du module auxiliaire (50) et dans lequel l'air issu de la turbine 53 de la turbomachine (51) du module auxiliaire est rejeté à l'extérieur de l'aéronef.

2. Système selon la revendication 1, **caractérisé en ce qu'**il comprend en outre une vanne de régulation, dite vanne d'isolation module (56), agencée fluidiquement entre ledit dispositif de prélèvement moteur (10) et l'entrée d'air de pack (21), et pilotée par ladite unité de commande pour être ouverte dans ledit mode standard et fermée dans ledit mode air frais.

3. Système selon la revendication 1, **caractérisé en ce que** ladite sortie d'air (52b) du compresseur de ladite turbomachine auxiliaire (51) est reliée à ladite entrée d'air de pack (21) en aval d'une vanne de régulation, dite vanne d'entrée de pack (58), agencée fluidiquement entre ledit dispositif de prélèvement moteur (10) et ladite entrée d'air de pack (21).

4. Système selon l'une des revendications 1 à 3, **caractérisé en ce qu'**il comprend en outre une trappe montée sur ladite écope (60) de prélèvement d'air extérieure et pilotée par ladite unité de commande pour pouvoir bloquer l'entrée d'air de l'écope dans ledit mode standard.

5. Système selon l'une des revendications 1 à 4, **caractérisé en ce qu'**il comprend en outre une conduite, dite conduite de récupération d'air cabine (48), adaptée pour pouvoir relier fluidiquement une sortie d'air (5b) de la cabine et une entrée d'air (53a) de ladite turbine de ladite turbomachine auxiliaire (51).

6. Système selon la revendication 5, **caractérisé en ce qu'**il comprend en outre une vanne trois voies (74) à deux entrées alimentées respectivement par le flux d'air issu du dispositif de prélèvement moteur (10) et le flux d'air issu de la récupération cabine (5) et une sortie alimentant une entrée de ladite turbine (53) de la turbomachine auxiliaire.

7. Système selon l'une des revendications 5 ou 6, **caractérisé en ce qu'**il comprend en outre un échangeur de chaleur (71) agencé simultanément sur ladite conduite de récupération d'air cabine (48) et sur ladite conduite de sortie d'air pressurisé (46) dudit module auxiliaire pour pouvoir assurer des échanges thermiques entre le flux d'air issu du compresseur (52) de ladite turbomachine auxiliaire et le flux d'air issu de ladite cabine (5).

8. Système selon l'une des revendications 1 à 7, **caractérisé en ce que** ladite turbomachine auxiliaire (51) est une turbomachine quatre roues comprenant deux turbines en série et deux compresseurs en série couplés mécaniquement les uns aux autres.

9. Aéronef comprenant au moins un moteur de propulsion, une cabine (5) et un système de conditionnement d'air de ladite cabine, **caractérisé en ce que** ledit système de conditionnement d'air est conforme à l'une des revendications 1 à 8.

10. Procédé de conditionnement d'air d'une cabine d'un aéronef comprenant :
- un prélèvement d'air pressurisé sur un moteur propulsif de l'aéronef,
- un conditionnement d'un air destiné à alimenter la cabine (5) par un pack de conditionnement d'air (20), comprenant une entrée d'air de pack reliée fluidiquement audit dispositif de prélèvement d'air pressurisé, et une sortie d'air de pack reliée fluidiquement à ladite cabine pour pouvoir l'alimenter en air à pression et température contrôlées,
**caractérisé en ce qu'**il comprend en outre une fourniture d'un air pressurisé par un module auxiliaire de fourniture (50) d'un air pressurisé comprenant :
- une turbomachine, dite turbomachine auxiliaire, comprenant au moins un compresseur muni d'une entrée d'air et une sortie d'air, et au moins une turbine munie d'une entrée d'air et d'une sortie d'air, couplés mécaniquement l'un à l'autre,
- une conduite, dite conduite d'entrée d'air frais, adaptée pour pouvoir relier fluidiquement une écope de prélèvement d'air extérieur et ladite entrée d'air du compresseur,
- une conduite, dite conduite d'entrée d'air bleed, adaptée pour pouvoir relier en communication de fluide ledit dispositif de prélèvement d'air pressurisé et ladite entrée de la turbine, ladite conduite étant équipée d'une vanne de régulation du débit d'air, dite vanne module,
- une conduite, dite conduite de sortie d'air frais pressurisé, adaptée pour pouvoir relier fluidiquement ladite sortie d'air du compresseur et ladite entrée d'air de pack.
et une commande de ladite vanne module (55) pour pouvoir activer au moins les deux modes suivants :
- un mode, dit mode standard, dans lequel ladite vanne module est fermée, de manière à ce que ladite entrée d'air de pack soit exclusivement alimentée par l'air bleed issu du dispositif de prélèvement d'air pressurisé,
- un mode, dit mode air frais, dans lequel ladite vanne module est ouverte, de manière à ce que ladite entrée d'air de pack puisse être alimentée par l'air pressurisé issu du module auxiliaire et dans lequel l'air issu de la turbine de la turbomachine du module auxiliaire est rejeté à l'extérieur de l'aéronef .

## Patentansprüche

1. Klimasystem einer Kabine (5) eines Luftfahrzeugs, umfassend:
- eine Vorrichtung zur Entnahme von Druckluft an einem Antriebstriebwerk des Luftfahrzeugs, als Triebwerksentnahmevorrichtung (10) bezeichnet,
- ein Klimaaggregat (20), umfassend einen Aggregatlufteinlass (21), der fluidisch mit der Triebwerksentnahmevorrichtung (10) verbunden ist, und einen Aggregatluftauslass (22), der dazu ausgelegt ist, fluidisch mit der Kabine (5) verbunden werden zu können, um diese mit Luft mit geregeltem Druck und geregelter Temperatur versorgen zu können,
**dadurch gekennzeichnet, dass** es ferner ein Hilfsmodul (50) zur Zufuhr von Druckluft umfasst, das Folgendes umfasst:
- eine Turbomaschine, als Hilfsturbomaschine (51) bezeichnet, umfassend mindestens einen Verdichter (52), der mit einem Lufteinlass (52a) und einem Luftauslass (52b) versehen ist, und mindestens eine Turbine (53), die mit einem Lufteinlass (53a) und einem Luftauslass (53b) versehen ist, die mechanisch miteinander gekoppelt sind,
- eine Leitung, als Frischlufteinlassleitung (44) bezeichnet, die dazu ausgelegt ist, eine Hutze (60) zur Entnahme von Außenluft und den Lufteinlass (52a) des Verdichters fluidisch verbinden zu können,
- eine Leitung, als Zapflufteinlassleitung (45) bezeichnet, die dazu ausgelegt ist, die Triebwerksentnahmevorrichtung (10) und den Einlass (53a) der Turbine in Fluidverbindung bringen zu können, wobei die Leitung (45) mit einem Ventil zur Regelung des Durchsatzes der die Turbine versorgenden Luft ausgestattet ist, das als Modulventil (55) bezeichnet wird,
- eine Leitung, als Druckfrischluft-Auslassleitung (46) bezeichnet, die dazu ausgelegt ist, den Luftauslass (52b) des Verdichters und den Aggregatlufteinlass (21) fluidisch verbinden zu können.
und dass es eine Steuereinheit für das Modulventil (55) umfasst, die dazu konfiguriert ist, mindestens die beiden folgenden Modi aktivieren zu können:
- einen Modus, als Standardmodus bezeichnet, in dem das Modulventil (55) geschlossen ist, so dass der Aggregatlufteinlass (21) ausschließlich mit der aus der Triebwerksentnahmevorrichtung (10) stammenden unter Druck stehenden Zapfluft versorgt wird,
- einen Modus, als Frischluftmodus bezeichnet, in dem das Modulventil (55) geöffnet ist, so dass der Aggregatlufteinlass (21) mit der aus dem Hilfsmodul (50) stammenden Druckluft versorgt werden kann, und in dem die aus der Turbine 53 der Turbomaschine (51) des Hilfsmoduls stammende Luft aus dem Luftfahrzeug nach außen abgeführt wird.

2. System nach Anspruch 1, **dadurch gekennzeichnet, dass** es ferner ein Regelventil, als Modulabsperrventil (56) bezeichnet, umfasst, das fluidisch zwischen der Triebwerksentnahmevorrichtung (10) und dem Aggregatlufteinlass (21) angeordnet ist und von der Steuereinheit angesteuert wird, um im Standardmodus geöffnet und im Frischluftmodus geschlossen zu sein.

3. System nach Anspruch 1, **dadurch gekennzeichnet, dass** der Luftauslass (52b) des Verdichters der Hilfsturbomaschine (51) stromabwärts eines Regelventils, als Aggregateinlassventil (58) bezeichnet, das fluidisch zwischen der Triebwerksentnahmevorrichtung (10) und dem Aggregatlufteinlass (21) angeordnet ist, mit dem Aggregatlufteinlass (21) verbunden ist.

4. System nach einem der Ansprüche 1 bis 3, **dadurch gekennzeichnet, dass** es ferner eine Klappe umfasst, die an der Hutze (60) zur Entnahme von Außenluft angebracht ist und von der Steuereinheit angesteuert wird, um den Lufteinlass der Hutze im Standardmodus versperren zu können.

5. System nach einem der Ansprüche 1 bis 4, **dadurch gekennzeichnet, dass** es ferner eine Leitung, als Kabinenluft-Rückgewinnungsleitung (48) bezeichnet, umfasst, die dazu ausgelegt ist, einen Luftauslass (5b) der Kabine und einen Lufteinlass (53a) der Turbine der Hilfsturbomaschine (51) fluidisch verbinden zu können.

6. System nach Anspruch 5, **dadurch gekennzeichnet, dass** es ferner ein Dreiwegeventil (74) mit zwei Einlässen, die jeweils von dem aus der Triebwerksentnahmevorrichtung (10) stammenden Luftstrom und dem aus der Kabinenrückgewinnung (5) stammenden Luftstrom versorgt werden, und einem Auslass umfasst, der einen Einlass der Turbine (53) der Hilfsturbomaschine versorgt.

7. System nach einem der Ansprüche 5 oder 6, **dadurch gekennzeichnet, dass** es ferner einen Wärmetauscher (71) umfasst, der gleichzeitig an der Kabinenluft-Rückgewinnungsleitung (48) und an der Druckluft-Auslassleitung (46) des Hilfsmoduls angeordnet ist, um einen Wärmeaustausch zwischen dem aus dem Verdichter (52) der Hilfsturbomaschine stammenden Luftstrom und dem aus der Kabine (5) stammenden Luftstrom gewährleisten zu können.

8. System nach einem der Ansprüche 1 bis 7, **dadurch gekennzeichnet, dass** die Hilfsturbomaschine (51) eine Vierrad-Turbomaschine ist, die zwei in Reihe geschaltete Turbinen und zwei in Reihe geschaltete Verdichter umfasst, die mechanisch miteinander gekoppelt sind.

9. Luftfahrzeug, umfassend mindestens ein Antriebstriebwerk, eine Kabine (5) und ein Klimasystem der Kabine, **dadurch gekennzeichnet, dass** das Klimasystem einem der Ansprüche 1 bis 8 entspricht.

10. Verfahren zur Klimatisierung einer Kabine eines Luftfahrzeugs, umfassend:
- eine Entnahme von Druckluft an einem Antriebstriebwerk des Luftfahrzeugs,
- eine Klimatisierung einer zur Versorgung der Kabine (5) bestimmten Luft durch ein Klimaaggregat (20), umfassend einen Aggregatlufteinlass, der fluidisch mit der Vorrichtung zur Entnahme von Druckluft verbunden ist, und einen Aggregatluftauslass, der fluidisch mit der Kabine verbunden ist, um diese mit Luft mit geregeltem Druck und geregelter Temperatur versorgen zu können,
**dadurch gekennzeichnet, dass** es ferner eine Zufuhr von Druckluft durch ein Hilfsmodul (50) zur Zufuhr von Druckluft umfasst, das Folgendes umfasst:
- eine Turbomaschine, als Hilfsturbomaschine bezeichnet, umfassend mindestens einen Verdichter, der mit einem Lufteinlass und einem Luftauslass versehen ist, und mindestens eine Turbine, die mit einem Lufteinlass und einem Luftauslass versehen ist, die mechanisch miteinander gekoppelt sind,
- eine Leitung, als Frischlufteinlassleitung bezeichnet, die dazu ausgelegt ist, eine Hutze zur Entnahme von Außenluft und den Lufteinlass des Verdichters fluidisch verbinden zu können,
- eine Leitung, als Zapflufteinlassleitung bezeichnet, die dazu ausgelegt ist, die Vorrichtung zur Entnahme von Druckluft und den Einlass der Turbine in Fluidverbindung bringen zu können, wobei die Leitung mit einem Ventil zur Regelung des Luftdurchsatzes ausgestattet ist, das als Modulventil bezeichnet wird,
- eine Leitung, als Druckfrischluft-Auslassleitung bezeichnet, die dazu ausgelegt ist, den Luftauslass des Verdichters und den Aggregatlufteinlass fluidisch verbinden zu können.
und ein Steuern des Modulventils (55), um mindestens die beiden folgenden Modi aktivieren zu können:
- einen Modus, als Standardmodus bezeichnet, in dem das Modulventil geschlossen ist, so dass der Aggregatlufteinlass ausschließlich mit der aus der Vorrichtung zur Entnahme von Druckluft stammenden Zapfluft versorgt wird,
- einen Modus, als Frischluftmodus bezeichnet, in dem das Modulventil geöffnet ist, so dass der Aggregatlufteinlass mit der aus dem Hilfsmodul stammenden Druckluft versorgt werden kann, und in dem die aus der Turbine der Turbomaschine des Hilfsmoduls stammende Luft aus dem Luftfahrzeug nach außen abgeführt wird.

## Claims

1. Air-conditioning system for an aircraft cabin (5) comprising:
- a device for bleeding pressurized air from a propulsion engine of the aircraft, referred to as engine bleed device (10),
- an air-conditioning pack (20) comprising a pack air inlet (21) fluidically connected to said engine bleed device (10), and a pack air outlet (22) suitable to be able to be fluidically connected to said cabin (5) in order to be able to supply it with air at controlled pressure and temperature,
**characterized in that** it further comprises an auxiliary module (50) for supplying pressurized air comprising:
- a turbomachine, referred to as auxiliary turbomachine (51), comprising at least one compressor (52) provided with an air inlet (52a) and an air outlet (52b), and at least one turbine (53) provided with an air inlet (53a) and an air outlet (53b) which are mechanically coupled to each other,
- a conduit, referred to as fresh air inlet conduit (44), suitable to be able to fluidically connect a scoop (60) for drawing in external air and said air inlet (52a) of the compressor,
- a conduit, referred to as bleed air inlet conduit (45), suitable to be able to connect in fluid communication said engine bleed device (10) and said inlet (53a) of the turbine, said conduit (45) being equipped with a valve for regulating the flow rate of air supplying said turbine, referred to as module valve (55),
- a conduit, referred to as pressurized fresh air outlet conduit (46), suitable to be able to fluidically connect said air outlet (52b) of the compressor and said pack air inlet (21).
and **in that** it comprises a unit for controlling said module valve (55) configured to be able to activate at least the following two modes:
- a mode, referred to as standard mode, in which said module valve (55) is closed, so that said pack air inlet (21) is exclusively supplied with the pressurized bleed air coming from the engine bleed device (10),
- a mode, referred to as fresh air mode, in which said module valve (55) is open, so that said pack air inlet (21) can be supplied with the pressurized air coming from the auxiliary module (50) and in which the air coming from the turbine (53) of the turbomachine (51) of the auxiliary module is discharged outside the aircraft.

2. System as claimed in claim 1, **characterized in that** it further comprises a regulating valve, referred to as module isolation valve (56), fluidically arranged between said engine bleed device (10) and the pack air inlet (21), and controlled by said control unit in order to be open in said standard mode and closed in said fresh air mode.

3. System as claimed in claim 1, **characterized in that** said air outlet (52b) of the compressor of said auxiliary turbomachine (51) is connected to said pack air inlet (21) downstream of a regulating valve, referred to as pack inlet valve (58), fluidically arranged between said engine bleed device (10) and said pack air inlet (21).

4. System as claimed in any one of claims 1 to 3, **characterized in that** it further comprises a trap mounted on said scoop (60) for drawing in external air and controlled by said control unit in order to be able to block the air inlet of the scoop in said standard mode.

5. System as claimed in any one of claims 1 to 4, **characterized in that** it further comprises a conduit, referred to as cabin air recovery conduit (48), suitable to be able to fluidically connect an air outlet (5b) of the cabin and an air inlet (53a) of said turbine of said auxiliary turbomachine (51).

6. System as claimed in claim 5, **characterized in that** it further comprises a three-way valve (74) with two inlets respectively supplied by the air flow coming from the engine bleed device (10) and the air flow coming from the cabin recovery (5) and an outlet supplying an inlet of said turbine (53) of the auxiliary turbomachine.

7. System as claimed in any one of claims 5 or 6, **characterized in that** it further comprises a heat exchanger (71) arranged simultaneously on said cabin air recovery conduit (48) and on said pressurized air outlet conduit (46) of said auxiliary module in order to be able to ensure thermal exchanges between the air flow coming from the compressor (52) of said auxiliary turbomachine and the air flow coming from said cabin (5).

8. System as claimed in any one of claims 1 to 7, **characterized in that** said auxiliary turbomachine (51) is a four-wheel turbomachine comprising two turbines in series and two compressors in series, mechanically coupled to each other.

9. Aircraft comprising at least one propulsion engine, a cabin (5) and an air-conditioning system of said cabin, **characterized in that** said air-conditioning system is in accordance with any one of claims 1 to 8.

10. Method of air-conditioning of an aircraft cabin comprising:
- bleeding pressurized air from a propulsion engine of the aircraft,
- conditioning air intended to supply the cabin (5) by an air-conditioning pack (20), comprising a pack air inlet fluidically connected to said pressurized air bleed device, and a pack air outlet, fluidically connected to said cabin in order to be able to supply it with air at controlled pressure and temperature,
**characterized in that** it further comprises supplying pressurized air by an auxiliary module (50) for supplying pressurized air comprising:
- a turbomachine, referred to as auxiliary turbomachine, comprising at least one compressor provided with an air inlet and an air outlet, and at least one turbine provided with an air inlet and an air outlet which are mechanically coupled to each other,
- a conduit, referred to as fresh air inlet conduit, suitable to be able to fluidically connect a scoop for drawing in external air and said air inlet of the compressor,
- a conduit, referred to as bleed air inlet conduit, suitable to be able to connect in fluid communication said pressurized air bleed device and said inlet of the turbine, said conduit being equipped with a valve for regulating the air flow rate, referred to as module valve,
- a conduit, referred to as pressurized fresh air outlet conduit, suitable to be able to fluidically connect said air outlet of the compressor and said pack air inlet.
and controlling said module valve (55) in order to be able to activate at least the following two modes:
- a mode, referred to as standard mode, in which said module valve is closed, so that said pack air inlet is exclusively supplied with the bleed air coming from the pressurized air bleed device,
- a mode, referred to as fresh air mode, in which said module valve is open, so that said pack air inlet can be supplied with the pressurized air coming from the auxiliary module and in which the air coming from the turbine of the turbomachine of the auxiliary module is discharged outside the aircraft.
